# EUROPEAN PATENT APPLICATION

(11) **EP 3 945 302 A1**
(43) Date of publication of application: **02.02.2022**
(21) Application number: 21179611.5
(22) Date of filing: 15.06.2021
(51) Int. Cl.: G01N 3/08

(54) **TENSION TEST METHOD AND TEST PIECE**

(30) Priority: 31.07.2020 JP 2020130476
(71) Applicant: Shimadzu Techno-Research, Inc., Kyoto-shi, Kyoto 604-8436 (JP)
(72) Inventor: NAKAYAMA, Takashi, Kyoto, 604-8436 (JP)
(74) Representative: Mewburn Ellis LLP

(57) **Abstract**

Provided is a tension test method capable of easily aligning an observation area of a test piece and performing a tension test while avoiding stress concentration on the test piece.

Three actuators 11 arranged on an identical plane are used, and a tensile load is applied to each tensile section 22 of a test piece 20 including three tensile sections 22 by using each actuator 11 to conduct a tension test on the test piece 20.

## Description

### BACKGROUND

### Technical Field

The present invention relates to a tension test method and a test piece.

### Related Art

Generally, tension test apparatuses for conducting tension tests on test pieces are known.

Of such apparatuses, in a two-axis tension test apparatus, four actuators arranged at right angles pull a test piece formed in a cross shape to conduct the test.

In this case, the test piece having a cross shape is formed with a plurality of slits along each test piece on an outside of a central portion in the cross shape in order to correspond to the elongation of the test piece in one direction (for example, see "Development of biaxial tension testing method for hard aluminum alloy sheets for beverage cans" (March 2014, Yasuhiro Hanafusa, Department of Mechanical Systems Engineering, Graduate School of Engineering, Tokyo University of Agriculture and Technology)).

### SUMMARY

In a case where the plurality of slits are formed in the test piece and tensile loads are applied to the test piece in different directions by approximately 90°, however, stress is concentrated on tip parts the plurality of slits. Consequently, the test piece is likely to break from such parts.

For this reason, unless the tensile load in each direction is properly controlled, a problem may occur that a test area misaligns vertically and horizontally, and excessive force affects an observation area.

An object of the present invention is to provide a tension test method and a test piece capable of easily aligning an observation area of a test piece and conducting a tension test while avoiding stress concentration on the test piece.

According to a first aspect of the present invention, a tension test method includes arranging three actuators on an identical plane; and applying tensile loads respectively to three tensile sections of a test piece by using the three actuators to conduct a tension test of the test piece.

According to a first aspect of the present invention, the tensile loads are respectively applied to the three tensile sections of the test piece by the respective actuators. This configuration enables absorbing a deviation of the tensile loads applied to the respective tensile sections and facilitating the balance keeping, so that the tensile loads on the three tensile sections are easily balanced with one another. Therefore, the alignment of the test piece main body can be easily performed, and stress concentration on the test piece can be avoided. In addition, the stress concentration can be avoided, and this eliminates the need for creating slits or the like that are conventionally provided in the parts where stress concentration occurs.

### BRIEF DESCRIPTION OF DRAWINGS

FIG. 1 is a schematic configuration diagram showing a tension test apparatus in an embodiment, to which a tension test method according to the present invention is applied; and
FIG. 2 is a plan view showing a test piece in an embodiment of the present invention.

### DETAILED DESCRIPTION

Hereinafter, embodiments of the present invention will be described with reference to the drawings.

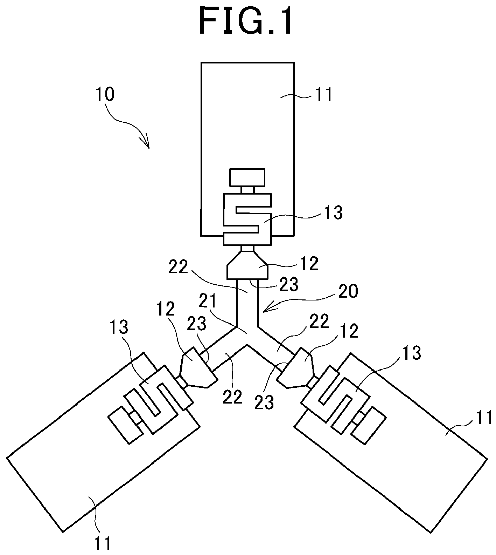

FIG. 1 is a schematic configuration diagram showing a tension test apparatus in an embodiment, to which a tension test method according to the present invention is applied.

A tension test apparatus 10 measures the tensile strength of a test piece 20 to be tested.

The tension test apparatus 10 includes an actuator 11 for a tension test.

In the present embodiment, the actuator 11 is composed of three actuators 11. The respective actuators 11 are arranged on an identical plane, and are located such that the angles made by tensile directions are respectively 120°.

Grippers 12 for gripping and securing the test piece 20 are respectively provided at end portions of the actuators 11 facing one another.

Each actuator 11 and each gripper 12 are coupled via a load cell 13 for measuring a load applied to the test piece 20 at the time of the tension test.

It is to be noted that in the present embodiment, the angles made by the tensile directions formed by the respective actuators 11 are configured to be 120°. However, the present invention is not limited to this.

For example, two of the three angles may be arranged to have identical obtuse angles. For example, the two angles may be 135°, and the remaining one angle may be 90°. The two angles may be 150°, and the remaining one angle may be 60°.

Next, the test piece 20 will be described.

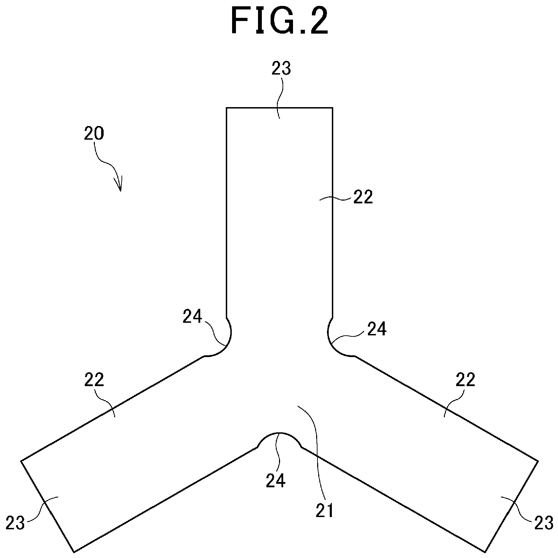

FIG. 2 is a plan view showing the test piece 20 in an embodiment according to the present invention.

As shown in FIG. 2, the test piece 20 includes a test piece main body 21, and the test piece main body 21 is integrally formed with three tensile sections 22 extending radially. The tensile section 22 is formed in a long shape, and a tip portion of each tensile section 22 serves as a gripped section 23, which is gripped and secured by the gripper 12 of each actuator 11.

The respective tensile sections 22 are formed such that the angles made by extending directions with one another are respectively 120°. That is, the angles made by the extending directions of the respective tensile sections 22 are identical to one another.

Further, in the present embodiment, at locations, of the test piece main body 21, where the respective tensile sections 22 intersect with one another, notches 24 are respectively arranged by forming the intersecting parts of the tensile sections 22 to have arc shapes concaved on the test piece main body 21 side.

Such notches 24 are provided for preventing stress from concentrating on the intersecting parts of the respective tensile sections 22, when a tension test that the actuators 11 pull the respective tensile sections 22 is conducted.

It is to be noted that in the present embodiment, the notches 24 are each formed in an arc shape concaved on the test piece main body 21 side. However, the present invention is not limited to this. For example, the notch 24 may be formed in an arc shape protruding from the test piece main body 21. Any shape may be adopted, as long as the stress is not concentrated on the intersecting parts of the tensile sections 22.

It is to be noted that in the present embodiment, the angles made by the tensile directions formed by the respective actuators 11 are configured to be 120°. However, the present invention is not limited to this.

For example, two of the three angles may be arranged to have identical obtuse angles. For example, the two angles may be 135°, and the remaining one angle may be 90°. The two angles may be 150°, and the remaining one angle may be 60°.

In a case where the actuators 11 are arranged in such a manner, the test piece 20 has to have a shape that matches the respective actuators 11.

That is, for example, in a case where the two angles made by the tensile directions formed by the actuators 11 are respectively 135° and the remaining one angle is 90°, the two angles of the test piece 20 made by the tensile sections 22 are also respectively set to 135° and the remaining one angle is also set to 90°.

Further, for example, in a case where the two angles made by the tensile directions formed by the actuators 11 are respectively 150° and the remaining one angle is 60°, the two angles of the test piece 20 made by the tensile sections 22 are also respectively set to 150° and the remaining one angle is also set to 60°.

Next, a tension test method using the tension test apparatus 10 in the present embodiment will be described.

First, the gripped sections 23 of the test piece 20 are gripped and secured to the grippers 12 of the respective actuators 11 of the tension test apparatus 10.

In this state, tensile loads are applied to the test piece 20 by the respective actuators 11, and the test piece 20 is aligned.

In this case, in the present embodiment, the tensile directions made by the respective actuators 11 are formed at 120°. Therefore, when one tensile section 22 is pulled, the other two tensile sections 22 are evenly pulled. Such actions of the tensile sections 22 are performed on the respective tensile sections 22. This configuration enables absorbing a deviation of the tensile loads and facilitating the balance keeping, so that the tensile loads on the three tensile sections 22 are easily balanced with one another.

Therefore, the alignment of the test piece main body 21 is easily enabled.

Subsequently, the test loads are respectively applied by the actuators 11 and measurements are carried out by the load cells 13, so that the tension test of the test piece 20 is conducted.

In this case, in the present embodiment, the tensile directions formed by the respective actuators 11 are set at 120°. Therefore, while the tensile loads respectively applied to the tensile sections 22 are keeping balance, the loads can be applied evenly to the test piece main body 21.

Further, the notches 24 are formed in the test piece 20. This configuration enables preventing the stress from concentrating on joint parts between the test piece main body 21 and the respective tensile sections 22, when the tensile loads are respectively applied to the tensile sections 22 by the actuators 11.

According to the present embodiment, the following effects are obtained.

In a tension test method in the present embodiment, the three actuators 11 arranged on an identical plane are used, and the tensile loads are respectively applied to the three tensile sections 22 included in the test piece 20 by using the three actuators 11 to conduct the tension test of the test piece 20.

This configuration enables absorbing a deviation of the tensile loads applied to the respective tensile sections 22 and facilitating the balance keeping, so that the tensile loads on the three tensile sections 22 are easily balanced with one another. Therefore, the alignment of the test piece main body 21 can be easily performed, and stress concentration on the test piece 20 can be avoided. In addition, the stress concentration can be avoided, and this eliminates the need for creating slits or the like that are conventionally provided in the parts where stress concentration occurs.

Further, in the tension test method in the present embodiment, the angles made by the tensile directions formed by the three actuators 11 are configured to be all identical. Consequently, the angles made by the tensile directions formed by the respective actuators 11 are all identical.

This configuration enables absorbing a deviation of the tensile loads applied to the respective tensile sections 22 and facilitating the balance keeping, so that the tensile loads on the three tensile sections 22 are easily balanced with one another. Therefore, the alignment of the test piece main body 21 can be easily performed, and stress concentration on the test piece 20 can be avoided.

Further, the test piece 20 in the present embodiment includes the tensile sections 22 extending in three directions on the identical plane from the test piece main body 21, and notches 24 are respectively formed in the intersecting parts of the tensile sections 22 to have arc shapes, at locations, of the test piece main body 21, where the tensile sections 22 intersect one another.

Consequently, the tensile sections 22 extending in three directions on the identical plane from the test piece main body 21 are provided. This configuration enables absorbing a deviation of the tensile loads applied to the respective tensile sections 22 and facilitating the balance keeping, so that the tensile loads on the three tensile sections 22 are easily balanced with one another, when the tensile loads are applied to the test piece 20. Therefore, the alignment of the test piece main body 21 can be easily performed, and stress concentration on the test piece 20 can be avoided.

Further, since the notches 24 are formed in the test piece 20, this configuration avoids stress concentration on the joint parts between the test piece main body 21 and the respective tensile sections 22, when the tensile loads are respectively applied to the tensile sections 22.

It is to be noted that the above-described embodiment is merely an example according to one aspect of the present invention, and can be optionally modified and applied without departing from the gist of the present invention.

Further, unless otherwise specified, the directions such as horizontal and vertical, various numerical values, and shapes in the above-described embodiments include a range (a so-called equivalent range) in which the same effects as those directions, numerical values, and shapes are exhibited.

### [Aspects]

It will be understood by those skilled in the art that the above-described exemplary embodiments and modifications are specific examples of the following aspects.

(First Aspect) A tension test method according to one aspect includes arranging three actuators on an identical plane, and applying tensile loads respectively to three tensile sections of a test piece by using the three actuators to conduct a tension test of the test piece.

According to the first aspect, the tensile loads are applied by the respective actuators to the three tensile sections of the test piece. This configuration enables absorbing a deviation of the tensile loads applied to the respective tensile sections and facilitating the balance keeping, so that the tensile loads on the three tensile sections are easily balanced with one another. Therefore, the alignment of the test piece main body can be easily performed, and stress concentration on the test piece can be avoided. In addition, the stress concentration can be avoided, and this eliminates the need for creating slits or the like that are conventionally provided in the parts where stress concentration occurs.

(Second Aspect) In the tension test method according to the first aspect, at least two angles of angles made by the tensile directions formed by the three actuators may be identical to each other.

According to the second aspect, the angles made by at least two tensile directions are identical to each other. This configuration enables absorbing a deviation of the tensile loads applied to the respective tensile sections and facilitating the balance keeping, so that the tensile loads on the three tensile sections are easily balanced with one another. Therefore, the alignment of the test piece main body can be easily performed, and stress concentration on the test piece can be avoided.

(Third Aspect) In the tension test method according to the first or second aspect, the angles respectively made by the tensile directions formed by the three actuators may be all identical.

According to the third aspect, the angles respectively made by the tensile directions formed by the three actuators are all identical. This configuration enables absorbing a deviation of the tensile loads applied to the respective tensile sections and facilitating the balance keeping, so that the tensile loads on the three tensile sections are easily balanced with one another. Therefore, the alignment of the test piece main body can be easily performed, and stress concentration on the test piece can be avoided.

(Fourth Aspect) A test piece includes tensile sections that respectively extend in three directions on an identical plane from a test piece main body, and notches respectively arranged by forming intersecting parts of the tensile sections to have arc shapes at locations, of the test piece main body, where the tensile sections intersect one another.

According to the fourth aspect, the tensile sections that respectively extend in three directions on an identical plane from the test piece main body are provided. This configuration enables absorbing a deviation of the tensile loads applied to the respective tensile sections and facilitating the balance keeping, so that the tensile loads on the three tensile sections are easily balanced with one another, when the tensile loads are respectively applied to the test piece. Therefore, the alignment of the test piece main body can be easily performed, and stress concentration on the test piece can be avoided.

Further, the notches are formed in the test piece. This configuration avoids stress concentration on the joint parts between the test piece main body and the respective tensile sections when the tensile loads are respectively applied to the tensile sections by the actuators. Reference Sings List
- 10: tension test apparatus
- 11: actuator
- 12: gripper
- 13: load cell
- 20: test piece
- 21: test piece main body
- 22: tensile section
- 23: gripped section
- 24: notch

## Claims

1. A tension test method **characterized by** comprising:
arranging three actuators (11) on an identical plane; and
applying tensile loads respectively to three tensile sections (22) of a test piece (20) by using the three actuators to conduct a tension test of the test piece.

2. The tension test method according to claim 1,
wherein at least two angles of angles made by the tensile directions formed by the three actuators are identical to each other.

3. The tension test method according to claim 1 or 2,
wherein the angles respectively made by the tensile directions formed by the three actuators are all identical.

4. A test piece **characterized by** comprising:
tensile sections (22) that respectively extend in three directions on an identical plane from a test piece main body (21); and
notches (24) respectively arranged by forming intersecting parts of the tensile sections to have arc shapes at locations, of the test piece main body, where the tensile sections intersect one another.
